# EUROPEAN PATENT SPECIFICATION

(11) **EP 1 597 887 B1**
(45) Date of publication and mention of the grant of the patent: **12.12.2012**
(21) Application number: 04707023.0
(22) Date of filing: 30.01.2004
(51) Int. Cl.: H04L 27/26

(54) **OFDM communication device**
OFDM-Kommunikationseinrichtung
Dispositif de communication OFDM

(30) Priority: 31.01.2003 JP 2003023165
(43) Date of publication of application: 23.11.2005
(73) Proprietor: Motorola Mobility LLC, Libertyville, IL 60048 (US)
(72) Inventor: AKITA, Hidenori, Tokyo 189-0001 (JP); IKEDA, Tetsu, Kanagawa 216-0035 (JP)
(74) Representative: McLeish, Nicholas Alistair Maxwell
(86) International application number: PCT/US2004/002614
(87) International publication number: WO 2004/070979

(56) References cited:
- EP-A- 0 553 841
- EP-A- 0 683 576
- US-A1- 2001 022 810
- US-B1- 6 381 251
- US-B1- 6 658 063
- RICHARD VAN NEE, RAMJEE PRASAD: "OFDM for Wireless Multimedia Communications" 2000, ARTECH HOUSE PUBLISHERS , XP002552800 page 86, section 4.6 - page 88

## Description

The present invention relates to a symbol synchronization method for use in an orthogonal frequency division multiplexing (OFDM) communication device, and more particularly to a technology that is used in an OFDM communication device, which uses a synchronization preamble to achieve symbol synchronization between a transmitter and a receiver, for the purpose of preventing the communication characteristics from deteriorating even when the synchronization preamble power is reduced.

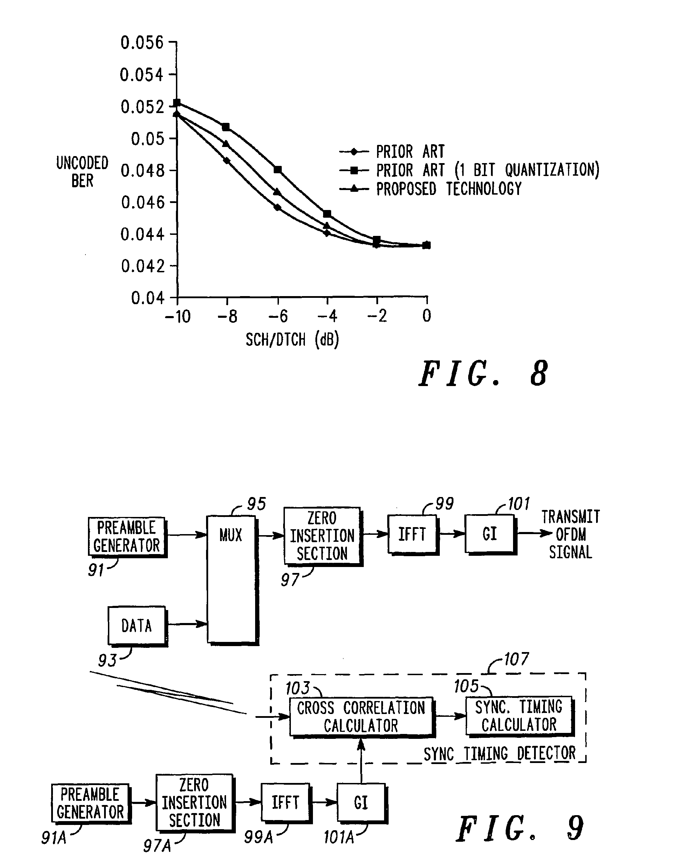

FIG. 9 schematically shows the configuration of a prior art OFDM communication device that uses a synchronization preamble to achieve symbol synchronization for OFDM communication. The transmitter section of the communication device shown in the figure comprises a preamble generator 91, a data supplier 93, a time multiplexer 95, a zero insertion section 97, an inverse fast Fourier transform (IFFT) section 99, and a guard interval (GI) insertion section 101.

The receiver section of the communication device shown in the figure comprises a time domain preamble (tx_preamble) supply section, which includes a preamble generator 91a, a zero insertion section 97a, an IFFT section 99a, and a GI insertion section 101a, and a synchronization timing detector 107. The synchronization timing detector 107 comprises a cross-correlation calculator 103 and a synchronization timing calculator 105.

In the configuration described above, the time multiplexer (MUX) 95 in the transmitter section time-multiplexes preamble data, which is supplied from the preamble generator 91 in a specified pattern, and transmit data, which is supplied from the data supplier 93. The zero insertion section 97 subjects the time-multiplexed data to a zero insertion process (filling with zeros) for the purpose of avoiding interference from an external signal. The resulting data is then inverse fast Fourier transformed in the IFFT section 99. Next, the GI insertion section 101 adds a guard interval (GI) to the transformed data in order to suppress multipath interference. A transmit OFDM signal comprising an OFDM symbol, which comprises the guard interval and information, is then generated.

The receiver section generates a time domain synchronization preamble (tx_preamble) in the same pattern as the transmitter section. This synchronization preamble is generated by the preamble generator 91a, zero insertion section 97a, IFFT section 99a, and GI insertion section 101a. For the time domain synchronization preamble (tx_preamble), the cross-correlation calculator 103 calculates the cross correlation with a receive signal transmitted from the transmitter section. The synchronization timing calculator 105 determines a position that is shifted from a peak value position by a specified amount of time and generates synchronization timing data. Symbol synchronization can then be achieved between the transmitter and receiver sections of the OFDM communication device.

However, the synchronization preamble (tx_preamble) used to determine the cross correlation in the receiver section requires a large number of bits because it has a Gauss distribution and wide dynamic range. Thus, the volume of calculations performed in the cross-correlation calculator 103 is huge. It is therefore proposed that the volume of calculations performed in the cross-correlation calculator 103 be reduced by quantizing the time domain synchronization preamble to one bit as a synchronization preamble (Taira, et al., "OFDM Communication System Timing Synchronization Method for Frequency-Selective Fading Environment," Journal B of The Institute of Electronics, Information and Communication Engineers, Vol. J84-B, No. 7, pp. 1255-1264, July 2001).

As described above, the calculations performed by a prior art to determine the cross correlation between a time domain synchronization preamble and receive signal are large in volume and not practical because the amplitude distributions of both signals are Gauss distributions having an average value of 0. It is therefore proposed that the synchronization preamble be used after being quantized to one bit. It is also preferred that the power for synchronization preamble transmission be minimized in the OFDM communication device for the purpose of reducing the time required for cross correlation calculations and the interference with synchronization preamble data. However, if the power for synchronization preamble transmission is reduced in a situation where the synchronization preamble is used after bering quantized to one bit as described above, the bit error rate (BER) and other communication characteristics deteriorate.
EP 0553 841 describes an apparatus for digital signal transmission using orthogonal frequency division multiplexing in which on a transmitter side predetermined reference data for each carrier is placed among valid transmission data.
'OFDM for Wireless Multimedia Communications' by Richard Van Nee and Ramjee Prasad, Artech House Publishers describes an OFDM synchronization technique in which the entire received training signal is used to achieve synchronization.

### SUMMARY OF THE INVENTION

The present invention has been made in view of the above prior art problems and provides a method for generating a time-multiplexed signal in an OFDM communication device while reducing the degree of characteristics deterioration even when the power for synchronization preamble transmission is reduced.

One aspect of the present invention provides a transmitter for use in an OFDM communication device, which uses a synchronization preamble to achieve synchronization between the transmitter and receiver. The transmitter obtains a zero amplitude reduced preamble signal by passing a specified synchronization preamble through an ideal low-pass filter to reduce a signal component near zero amplitude within a time domain, and time-multiplexes the obtained zero amplitude reduced preamble signal with transmit data to generate an OFDM transmit signal.

In the above instance, it is convenient that the ideal low-pass filter comprise an FFT section for subjecting an input signal to fast Fourier transform (FFT) and a zero substitution section for providing zero substitution for FFT section output components having a frequency higher than specified.

Further, the ideal low-pass filter may comprise a table that stores values obtained when input signals pass through the ideal low-pass filter in accordance with the values of the input signals.

It is also convenient that the ideal low-pass filter comprise a table that stores values obtained when input signals pass through the ideal low-pass filter in accordance with the values of the input signals.

Another aspect of the present invention provides a receiver in the OFDM communication device for use with the transmitter. The receiver a synchronization timing detector for determining the cross correlation between a receive signal and a specified synchronization preamble, which is patterned the same as the counterpart in the transmitter section, and detecting a synchronization position in accordance with the determined cross correlation.

In the above instance, it is convenient that the synchronization position be shifted from a peak position of the cross correlation by a specified amount of time.

Still another aspect of the present invention provides an OFDM communication device that uses a synchronization preamble to achieve synchronization between a transmitter and a receiver. The OFDM communication device comprises a transmitter for obtaining a zero amplitude reduced preamble signal by passing a specified synchronization preamble through an ideal low-pass filter to reduce a signal component near zero amplitude within a time domain, and generating an OFDM transmit signal by time-multiplexing the obtained zero amplitude reduced preamble signal with transmit data and a receiver having a synchronization timing detector for determining the cross correlation between a receive signal and a specified synchronization preamble, which is patterned the same as the counterpart in the transmitter section, and detecting a synchronization position in accordance with the determined cross correlation.

In the above instance, it is convenient that the ideal low-pass filter comprise an FFT section for subjecting an input signal to fast Fourier transform (FFT) and a zero substitution section for providing zero substitution for FFT section output components having a frequency higher than specified.

Further, the ideal low-pass filter may comprise a table that stores values obtained when input signals pass through the ideal low-pass filter in accordance with the values of the input signals.

It is also convenient that the synchronization position be shifted from a peak position of the cross correlation within the receiver by a specified amount of time.

### BRIEF DESCRIPTION OF THE DRAWINGS

FIG. 1 is a block diagram that schematically shows the configuration of one embodiment of an OFDM communication device according to the present invention.
FIG. 2 is a graph that compares the amplitude-vs.-PDF characteristic of a zero amplitude reduced preamble according to the present invention against that of a prior art.
FIG. 3 is a graph that compares the power-vs.-CDF characteristic of synchronization preamble use according to the present invention against that of a prior art.
FIG. 4 is a block diagram that illustrates a simulation model for performance evaluation of the present invention.
FIG. 5 is a block diagram that illustrates a simulation model for performance evaluation of a prior art communication device.
FIG. 6 illustrates the simulation conditions for performance evaluation.
FIGS. 7A and 7B illustrate the characteristics of a multipath fading channel that is used for performance evaluation.
FIG. 8 is a graph that compares the simulation results of the present invention and prior art.
FIG. 9 is a block diagram that schematically shows the configuration of a prior art OFDM communication device.

### DETAILED DESCRIPTION OF THE PREFERRED EMBODIMENTS

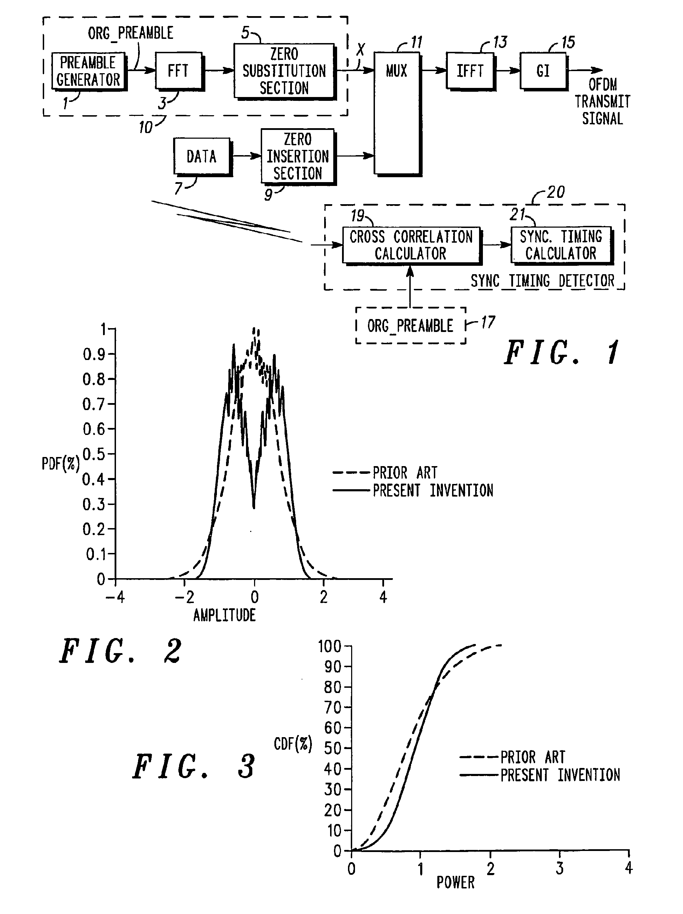

Preferred embodiments of the present invention will now be described with reference to the accompanying drawings. FIG. 1 schematically shows the configuration of one embodiment of an OFDM communication device according to the present invention. The transmitter section of the communication device shown in the figure comprises a synchronization signal generator 10, a data supplier 7, a zero insertion section 9, a time multiplexer (MUX) 11, an inverse fast Fourier transform (IFFT) section 13, and a guard interval (GI) insertion section 15. The synchronization signal generator 10 includes a preamble generator 1, a fast Fourier transform (FFT) section 3, and a zero substitution section 5.

The receiver section of the communication device comprises a synchronization timing detector 20, which includes a cross-correlation calculator 19 and a synchronization timing calculator 21, and a preamble supplier 17, which generates a synchronization preamble (org_preamble) that is patterned the same as the counterpart generated from the preamble generator 1 in the transmitter section.

In the transmitter section of the OFDM communication device shown in FIG. 1, the synchronization signal generator 10 generates a zero amplitude reduced preamble signal. In other words, the original preamble signal (org_preamble) for a specified pattern supplied from the preamble generator 1 is supplied to an ideal low-pass filter (ideal LPF), which comprises the FFT section 3 and zero substitution section 5. The ideal LPF is implemented when the original preamble signal is fast Fourier transformed in the FFT section 3 and then components having higher frequencies than those in a specified pass band are subjected to zero substitution. More particularly, the ideal LPF is implemented by subjecting frequency components having frequencies higher than specified to zero substitution.

Practically, the ideal LPF may comprise a table that stores values obtained when input signals pass through the ideal low-pass filter in accordance with the values of the input signals. When such a table is employed and configured to obtain an output signal in response to an input signal, an ideal LPF having a simple structure and a high response speed can be implemented.

The zero amplitude reduced preamble signal X, which is obtained as described above, is supplied to the time multiplexer 11. The transmit data fed from the data supplier 7 is subjected to zero insertion in the zero insertion section 9 as is the case with the aforementioned prior art, supplied to the time multiplexer 11, and time-multiplexed with the above zero amplitude reduced preamble signal X. The resulting time-multiplexed signal is inverse fast Fourier transformed in the IFFT section 13. Further, the GI insertion section 15 inserts a guard interval into the resulting signal. This produces a transmit OFDM signal.

The receiver section acquires a receive signal by receiving the transmit OFDM signal, which is obtained in a manner described above, via a desired communication channel. In the cross-correlation calculator 19, this receive signal calculates the cross correlation with a 1-bit synchronization preamble (org_preamble) that is prevalent before passage through the ideal LPF in the transmitter section. The resulting cross correlation value has a peak value for a specified timing part. The synchronization timing calculator 21 calculates a synchronization position, which is shifted from the peak value position by a specified amount of time. Symbol synchronization is then achieved between the transmitter and receiver sections.

FIG. 2 compares the amplitude-vs.-PDF characteristics of the zero amplitude reduced preamble signal, which is used with the OFDM communication device according to the present invention, and the synchronization preamble signal, which is used with the prior art. The term "PDF" is an acronym for probability density function. As is obvious from FIG. 2, the amount of near-zero signal component of the synchronization preamble according to the present invention is smaller than that of the prior art. It can therefore be estimated that the probability of significant deterioration in the instantaneous carrier-to-noise ratio (CNR) would decrease. Thus, it is possible to reduce the power required for synchronization preamble transmission.

FIG. 3 compares the power-vs.-CDF (cumulative distribution function) characteristics of the zero amplitude reduced preamble signal according to the present invention and the prior art synchronization preamble signal. It can be seen from the figure that a low-power portion of the synchronization preamble according to the present invention is reduced in terms of distribution.

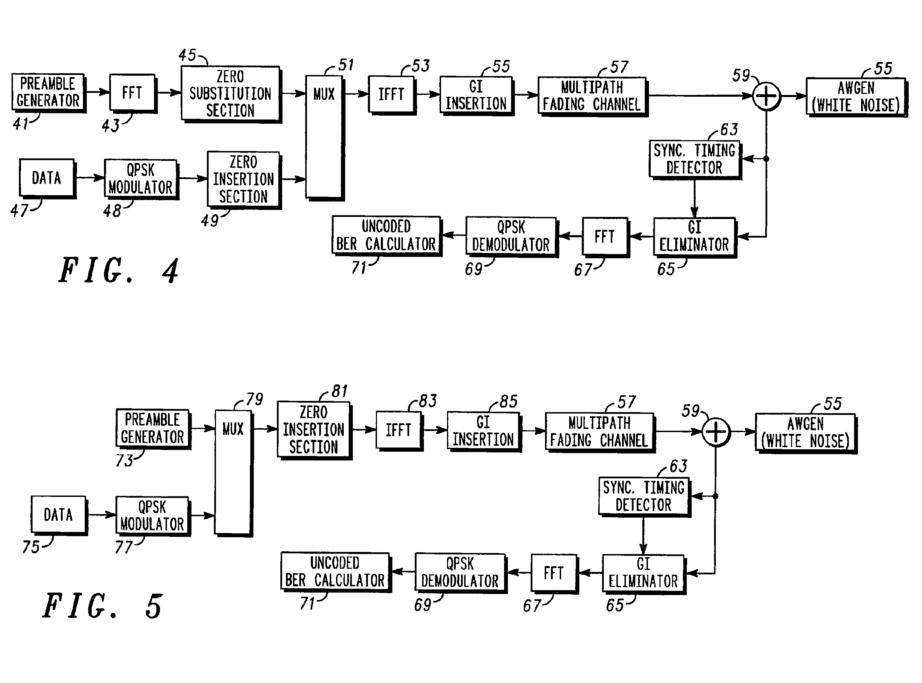

For comparison between the advantages provided by the present invention and the prior art, the simulation models shown in FIGS. 4 and 5 are evaluated. FIG. 4 shows a simulation model for a communication device that is configured in accordance with the present invention. In the configuration shown in FIG. 4, the configuration of a transmission section is basically the same as that of the transmission section of the communication device shown in FIG. 1. More specifically, the transmission section shown in FIG. 4 comprises a preamble generator 41, an FFT section 43, a zero substitution section 45, a data supplier 47, a QPSK modulator 48, a zero insertion section 49, a time multiplexer 51, an IFFT section 53, and a GI insertion section 55. It should be noted, however, that the QPSK modulator 48 is provided between the data supplier 47 and zero insertion section 49.

A multipath fading channel 57, an adder 59, a white noise (AWGN) generator 51, a synchronization timing detector 63, a GI eliminator 65, an FFT section 67, a QPSK demodulator 69, and an uncoded BER calculator 71 are incorporated to evaluate the signal in the transmitter section shown in FIG. 4.

FIG. 5 shows a simulation model for the prior art. As is the case with the transmitter section shown in FIG. 9, the transmitter section shown in FIG. 5 comprises a preamble generator 73, a data supplier 75, a QPSK modulator 77, a time multiplexer 79, a zero insertion section 81, an IFFT section 83, and a GI insertion section 85. It should be noted that the QPSK modulator 77 is provided between the data supplier 75 and time multiplexer 79. The elements for receiving a signal from the transmitter section described above for evaluation purposes are configured the same as shown in FIG. 4 and designated by the same reference numerals as indicated in FIG. 4.

The synchronization timing detector 63 in FIGS. 4 and 5 is configured the same as the synchronization timing detectors 20, 107, which are shown in FIGS. 1 and 9, respectively. Further, the uncoded information bit error rate (uncoded BER) prevalent when the power for synchronization preamble transmission is attenuated is employed as an evaluation index.

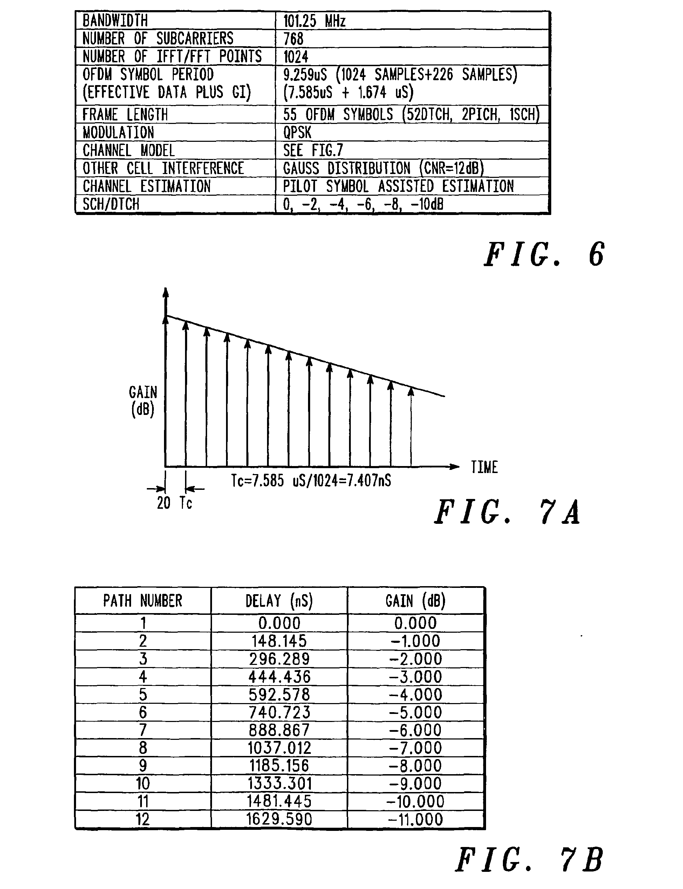

FIGS. 6 and 7 depict simulation conditions. FIG. 6 shows various simulation conditions. In FIG. 6, the term "SCH" denotes a synchronization preamble transmission channel, whereas the term "DTCH" denotes a data transmission channel.

FIGS. 7A and 7B show a channel model of a multipath fading channel. FIG. 7A shows an impulse response waveform of a 12-path type. The "Tc" value indicates a transmit OFDM signal cycle per sample. FIG. 7B shows the delay time and gain of each path.

FIG. 8 shows the results of the simulation described above. When the uncoded BER is 0.05, it is obvious from this figure that the power required for synchronization preamble transmission according to the present invention is approximately 1 dB smaller than in the prior art in which the employed synchronization preamble is quantized to one bit. An uncoded BER of 0.05 is equivalent to a BLER (block error rate) of 0.01 when a 1/2 rate Viterbi code is used. In the present invention, a 1-bit type synchronization preamble is used for cross correlation in the receiver section. Therefore, the volume of cross-correlation calculations may be the same as for the prior art 1-bit quantization type.

As a synchronization preamble for symbol synchronization between a transmitter and a receiver in an OFDM communication device, the present invention uses a preamble that has passed through an ideal LPF as described above. It is therefore possible to prevent the characteristics from significantly deteriorating even when the synchronization preamble power is reduced. As a result, excellent communication quality can be maintained even when the synchronization preamble is decreased in order to reduce the calculation time and interference with data.

### Description of the Symbols

- 1:: Preamble generator
- 3:: FFT section
- 5:: Zero substitution section
- 7:: Data supplier
- 9:: Zero insertion section
- 10:: Synchronization signal generator
- 11:: Time multiplexer
- 13:: IFFT section
- 15:: GI insertion section
- 17:: Preamble signal supplier
- 19:: Cross-correlation calculator
- 20:: Synchronization timing detector
- 21:: Synchronization timing calculator

## Claims

1. A method for generating a time-multiplexed signal in an OFDM transmitter, the method comprising the sequential steps of:
obtaining a zero amplitude reduced preamble signal by passing a specified synchronization preamble through an ideal low-pass filter (3) to reduce an amount of signal components having near zero amplitude;
time-multiplexing said zero amplitude reduced preamble signal with transmit data to generate an OFDM transmit signal.

2. The method according to claim 1 wherein said ideal low-pass filter (3) comprises a Fast Fourier Transform (FFT) section for subjecting the synchronization preamble to FFT and a zero substitution section for providing zero substitution for FFT section output components having a frequency higher than specified.

3. The method according to claim 1 wherein said ideal low-pass filter (3) comprises a table that stores values obtained when input signals pass through said ideal low-pass filter in accordance with the values of the input signals.

## Patentansprüche

1. Verfahren zum Erzeugen eines Zeitmultiplex-Signals in einem OFDM-Sender, wobei das Verfahren die folgenden aufeinanderfolgenden Schritte aufweist:
Erhalt eines reduzierten Präambel-Signals mit Null-Amplitude durch Leiten einer festgelegten Synchronisationspräambel durch einen idealen Tiefpassfilter (3) zur Verringerung einer Menge an Signalkomponenten mit beinaher Null-Amplitude;
Zeitmultiplexen des besagten reduzierten Präambel-Signals mit Null-Amplitude mit Übertragungsdaten zur Erzeugung eines OFDM-Übertragungssignals.

2. Verfahren nach Anspruch 1, wobei der besagte ideale Tiefpassfilter (3) einen Schnelle-Fourier-Transformations-(Fast Fourier Transform - FFT)Abschnitt aufweist, um die Synchronisationspräambel FFT und einem Null-Substitutions-Abschnitt zu unterziehen, um Null-Substitution an FFT-Abschnitts-Ausgangskomponenten bereitzustellen, die eine Frequenz aufweisen, die höher ist als festgelegt.

3. Verfahren nach Anspruch 1, wobei der besagte ideale Tiefpassfilter (3) eine Tabelle aufweist, die Werte speichert, die erhalten werden, wenn Eingangssignale den besagten idealen Tiefpassfilter gemäß den Werten der Eingangssignale passieren.

## Revendications

1. Procédé de génération d'un signal multiplexé temporellement dans un transmetteur OFDM, le procédé comprenant les étapes séquentielles de :
obtenir un signal de préambule réduit d'amplitude zéro en faisant passer un préambule de synchronisation spécifié à travers un filtre passe-bas idéal (3) afin de réduire une quantité des composants du signal ayant une amplitude proche de zéro ;
multiplexer temporellement ledit signal de préambule réduit d'amplitude zéro avec des données de transmission pour produit un signal de transmission OFDM.

2. Procédé selon la revendication 1, dans lequel ledit filtre passe-bas idéal (3) comprend une section de Transformée de Fourier Rapide (FFT) pour soumettre le préambule de synchronisation à la FFT et une section de substitution zéro pour réaliser une substitution zéro pour les composants de sortie de la section FFT ayant une fréquence plus élevée que spécifiée.

3. Procédé selon la revendication 1, dans lequel ledit filtre passe-bas idéal (3) comprend un tableau qui stocke les valeurs obtenues lorsque des signaux d'entrée passent à travers ledit filtre passe-bas idéal en accord avec les valeurs des signaux d'entrée.
